(19) Europäisches Patentamt
European Patent Office
Office européen des brevets

(11) **EP 3 793 804 B1**

(12) **EUROPÄISCHE PATENTSCHRIFT**

(45) Veröffentlichungstag und Bekanntmachung des Hinweises auf die Patenterteilung:
**13.03.2024   Patentblatt 2024/11**

(21) Anmeldenummer: **19782506.0**

(22) Anmeldetag: **25.09.2019**

(51) Internationale Patentklassifikation (IPC):
**B29C 49/48** *(2006.01)*    **B29C 49/06** *(2006.01)*

(52) Gemeinsame Patentklassifikation (CPC):
**B29C 49/48;** B29C 49/06; B29C 2049/4892; B29C 2949/0715

(86) Internationale Anmeldenummer:
**PCT/EP2019/075857**

(87) Internationale Veröffentlichungsnummer:
**WO 2020/064834 (02.04.2020 Gazette 2020/14)**

(54) **VORRICHTUNG ZUM UMFORMEN VON KUNSTSTOFFVORFORMLINGEN ZU KUNSTSTOFFBEHÄLTNISSEN SOWIE EINE BLASFORM UND EIN VERFAHREN ZUR HERSTELLUNG EINES BEHÄLTNISSES**

DEVICE FOR FORMING PLASTIC PREFORMS INTO PLASTIC CONTAINERS, A BLOW MOULD, AND A METHOD FOR PRODUCING A CONTAINER

DISPOSITIF POUR MOULER DES ÉBAUCHES EN MATIÈRE PLASTIQUE EN RÉCIPIENTS EN MATIÈRE PLASTIQUE ET MOULE DE SOUFFLAGE ET PROCÉDÉ POUR RÉALISER DES RÉCIPIENTS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.09.2018   DE 102018123624**

(43) Veröffentlichungstag der Anmeldung:
**24.03.2021   Patentblatt 2021/12**

(73) Patentinhaber: **Krones AG**
**93073 Neutraubling (DE)**

(72) Erfinder: **GELTINGER, Florian**
**93073 Neutraubling (DE)**

(74) Vertreter: **Hannke Bittner & Partner mbB**
**Regensburg**
**Prüfeninger Straße 1**
**93049 Regensburg (DE)**

(56) Entgegenhaltungen:
| | |
|---|---|
| US-A- 4 547 333 | US-A- 5 122 327 |
| US-A- 5 968 560 | US-A1- 2006 093 699 |
| US-A1- 2015 061 196 | US-A1- 2015 298 386 |
| US-A1- 2017 173 845 | US-A1- 2017 232 656 |
| US-B2- 8 550 803 | |

**Beschreibung**

Die vorliegende Erfindung bezieht sich auf eine Vorrichtung zum Umformen von Kunststoffvorformlingen zu Kunststoffbehältnissen sowie auf eine Blasform und ein Verfahren zur Herstellung eines Behältnisses. Derartige Verfahren und Vorrichtungen sind aus dem Stand der Technik seit langem bekannt. Dabei werden die Kunststoffvorformlinge üblicherweise in eine Blasform einer Blasmaschine eingebracht, innerhalb derer sie durch Beaufschlagung mit einem fließfähigen Medium, wie beispielsweise Druckluft, und durch Strecken mit einer Reckstange zu den Kunststoffbehältnissen umgeformt werden, in dem die Kunststoffvorformlinge gegen die Innenwände der Blasform gedrückt werden.

Die Blasform setzt sich dabei üblicherweise aus zwei Seitenteilen und einer Bodenform zusammen, welche einen Hohlraum ausbilden, welcher formgebend für die herzustellenden Kunststoffbehältnisse ist. Nach der Umformung der Kunststoffvorformlinge zu den Kunststoffbehältnissen ist es erforderlich diese aus der Blasform zu entnehmen. Hierzu werden üblicherweise die Blasformseitenteile geöffnet und die Bodenform nach unten gefahren.

Die Trennung zwischen der Bodenform und den Blasformseitenteilen erfolgt dabei aktuell immer in einem Tagentenpunkt in dem sich die Krümmung der Bodenkontur mit einer vertikalen, zylindrischen Mantelfläche der Behältniskontur bzw. der Blasformseitenteile schneidet. Um das Behältnis entformen (entnehmen) zu können muss daher mindestens dieser Bodenhub ausgeführt werden.

Aus kinematischer Sicht und hinsichtlich der Belastung ist der Bodenhub die kritische und leistungsbegrenzende Größe bezogen auf die mechanische Ausbringleistung bei einer Blasmaschine. Desto geringer der Bodenhub ausgeführt werden muss, desto geringer sind daher auch die Belastungen und desto höher ist auch die Ausbringleistung der Blasmaschine. Die Dokumente US2017/232656A1, US2015/298386A1, US4547333A, US5122327A, US5968560A, US8550803B2, US2015/061196A1, US2017/173845A1, US2006/09369A1 beschreiben Vorrichtungen zum Umformen von Kunststoffvorformlingen zu Kunststoffbehältnissen gemäß dem Stand der Technik.

Der vorliegenden Erfindung liegt daher die Aufgabe zugrunde, den Bodenhub der Bodenform von Blasformen, welcher insbesondere zur Entformung und Entnahme des Kunststoffbehältnisses ausgeführt wird, zu verringern. Diese Aufgabe wird erfindungsgemäß durch die Gegenstände der unabhängigen Ansprüche erreicht. Vorteilhafte Ausführungsformen und Weiterbildungen sind Gegenstand der Unteransprüche.

Eine erfindungsgemäße Vorrichtung zum Umformen von Kunststoffvorformlingen zu Kunststoffbehältnissen weist dabei wenigstens eine Blasform auf, welche wenigstens zwei Blasformseitenteile und eine Bodenform aufweist, wobei die Blasformseitenteile und die Bodenform einen Hohlraum ausbilden, welcher einer Negativkontur des umzuformenden Kunststoffbehältnisses entspricht und/oder innerhalb dessen die Kunststoffvorformlinge zu den Kunststoffbehältnissen (bei denen es sich insbesondere um Kunststoffflaschen handelt) umformbar sind, wobei zwischen den Blasformseitenteilen und der Bodenform wenigstens eine erste Trennebene und eine zweite Trennebene vorhanden ist, wobei die erste Trennebene zwischen den beiden Seitenteilen verläuft und die zweite Trennebene zwischen den Seitenteilen und der Bodenform, wobei durch die zweite Trennebene die Blasformseitenteile und die Bodenform voneinander trennbar sind und die Bodenform durch einen Bodenhub von den Blasformseitenteilen entfernbar ist.

Erfindungsgemäß liegt dabei die zweite Trennebene zwischen den Blasformseitenteilen und der Bodenform unterhalb eines Tangentenpunktes der Blasform oder des Behältnisses, in dem sich eine Krümmung der Bodenform oder eines Standfußes des Behältnisses mit einer vertikalen zylindrischen Mantelfläche der Blasformseitenteile oder der Behälteraußenwand schneidet.

Mit anderen Worten erfolgt dabei eine Trennung der Bodenform von den Blasformseitenteilen unterhalb eines Bereiches, an dem eine an die Bodenform angelegte Tangente gerade vertikal wird. Mit der vertikalen zylindrischen Mantelfläche ist dabei ein Bereich gemeint, in welchem das Behältnis noch einen umfänglichen kreisförmigen Durchmesser aufweist ohne, dass dieser durch die Ausbildung der Standfüße des Standbereichs des Behältnisses von der Kreisform abweicht. Unter vertikal wird dabei eine Richtung verstanden, welche in der Längsrichtung der Blasform bzw. des Kunststoffbehältnisses verläuft, in welcher der Mündungsbereich des Behältnisses nach oben gerichtet ist.

Da die Behälter- und Bodenkontur nicht verändert werden soll, wird erfindungsgemäß vorgeschlagen, die Trennung zwischen Bodenform und Blasformseitenteilen nicht wie aktuell üblich im oben beschriebenen Tangentenpunkt zu setzen, sondern weiter unterhalb. Dadurch kann bei gleichbleibender Kontur ein geringerer mechanischer Bodenhub umgesetzt werden. Gleichzeitig sinkt auch das Gewicht der Bodenform was sich zusätzlich positiv auf die Kinematik bzw. Leistung auswirkt.

Dieser geringere maximale Bodenhub ist dabei insbesondere auch im Hinblick auf eine höhere Ausstoßleistung der Vorrichtung vorteilhaft. Einzige Begleiterscheinung ist die nach unten wandernde Trennnaht zwischen Boden und Seitenteilen bei sehr großen Behältern.

Durch das Herabsetzen der Trennebene zwischen der Bodenform und den Blasformseitenteilen erfolgt insbesondere eine Veränderung der Blasform dahingehend, dass ein Teil der Bodenkontur in den Seitenteilen ausgebildet wird.

Die vorliegende Erfindung ist daher auch auf eine Vorrichtung zum Umformen von Kunststoffvorformlingen zu Kunststoffbehältnissen gerichtet mit wenigstens einer Blasform, welche wenigstens zwei Blasformseitenteile und eine Bodenform aufweist, wobei die Blasformseitenteile und die Bodenform einen Hohlraum ausbilden, welcher einer Negativkontur des umzuformenden Kunststoffbehältnisses entspricht und/oder innerhalb dessen die Kunststoffvorformlinge zu den Kunststoffbehältnissen (bei denen es sich insbesondere um Kunststoffflaschen handelt) umformbar sind,, wobei zwischen den Blasformseitenteilen und der Bodenform wenigstens eine erste Trennebene und eine zweite Trennebene vorhanden ist, wobei die erste Trennebene zwischen den beiden Seitenteilen verläuft und die zweite Trennebene zwischen den Seitenteilen und der Bodenform, wobei durch die zweite Trennebene die Blasformseitenteile und die Bodenform voneinander trennbar sind und die Bodenform durch einen Bodenhub von den Blasformseitenteilen entfernbar ist.

Erfindungsgemäß ist zumindest ein Teil der Bodenkontur der Bodenform in den Blasformseitenteilen angeordnet. Dies wird bevorzugt durch das Herabsetzen der zweiten Trennebene bei gleichbleibender Behältnisbzw. Blasformkontur erreicht. Bei dem Teil der Bodenkontur, welcher in den Blasformseitenteilen angeordnet ist, handelt es sich bevorzugt um einen Abschnitt, welcher den Standbereich bzw. die Standfüße des Behältnisses ausbildet. Insbesondere handelt es dabei um einen Bereich des Behältnisses in dem eine an diesen Bereich angelegte geometrische Tangente (bei aufrecht stehendem Behältnis) noch nicht vertikal verläuft.

Die Bodenform bildet dabei bevorzugt die Kontur des Bodens des Behältnisses aus. Besonders bevorzugt bildet die Bodenform den Standbereich bzw. die Standfüße des Behältnisses aus. Das umgeformte Behältnis weist bevorzugt wenigstens zwei Standfüße, bevorzugt wenigstens vier Standfüße und besonders bevorzugt fünf Standfüße auf. Bevorzugt weist das Behältnis höchstens 12, bevorzugt höchstens 10 und besonders bevorzugt höchstens 8 Standfüße auf.

Entsprechend weist die Bodenform bevorzugt eine Kontur auf, welche wenigstens zwei Standfüße, bevorzugt wenigstens vier Standfüße und besonders bevorzugt fünf Standfüße des Behältnisses ausbildet. Bevorzugt liegt dabei ein Zentrum, welches sich mittig in der Bodenform befindet, ausgehend von einer Fläche auf der das Behältnis steht, höher als die Standbereiche des Behältnisses welche auf dieser Fläche aufliegen. Die Standfüße weisen darüber hinaus bevorzugt eine Krümmung auf.

Die Blasformseitenteile bilden entsprechend bevorzugt eine Kontur einer Außenwandung bzw. eines Grundkörpers des Behältnisses aus. Weiterhin weist das umgeformte Kunststoffbehältnis bevorzugt einen Tragring auf und einen oberhalb des Tragrings angeordneten Mündungsbereich. Dieser Mündungsbereich umfasst dabei ein Gewinde für einen Verschluss. Der Mündungsbereich weist dabei bereits bei dem Kunststoffvorformling seine endgültige Form auf und wird daher nicht weiter umgeformt.

Bei der Umformung des Kunststoffvorformlings zu dem Kunststoffbehältnis wird der Vorformling bevorzugt gegen die Negativkontur der Blasform gedrückt um die gewünschte Form zu erhalten. Insbesondere die zweite Trennebene zwischen den Blasformseitenteilen und der Bodenform ist dabei auf dem fertigen Behältnis sichtbar.

Die oben erwähnte Trennung bzw. Entfernung der Bodenform von den Blasformseitenteilen ist dabei insbesondere notwendig, um das umgeformte Kunststoffbehältnis zu entformen und aus der Blasform entnehmen zu können. Bevorzugt werden hierzu zuerst die beiden Seitenteile der Blasform geöffnet und anschließend das Bodenteil nach unten verfahren. Der Bodenhub des Bodenteils erfolgt dabei bevorzugt in vertikaler Richtung und bevorzugt von dem ausgebildeten Standbereich des Behältnisses weg. Das Behältnis ist dabei derart in der Blasform angeordnet, so dass der Mündungsbereich des Behältnisses nach oben ragt. Bevorzugt erfolgt ein Bodenhub und/oder eine Bewegung des Bodenteils wenigstens über eine Distanz, welche der Höhe des Bodenteils entspricht.

Die vorliegende Erfindung ist dabei weiterhin auf eine Vorrichtung zum Umformen von Kunststoffvorformlingen zu Kunststoffbehältnissen mit wenigstens einer Blasform gerichtet, welche wenigstens zwei Blasformseitenteile und eine Bodenform aufweist, wobei die Blasformseitenteile und die Bodenform einen Hohlraum ausbilden, welcher einer Negativkontur des umzuformenden Kunststoffbehältnisses entspricht und/oder innerhalb dessen die Kunststoffvorformlinge zu den Kunststoffbehältnissen (bei denen es sich insbesondere um Kunststoffflaschen handelt) umformbar sind, wobei zwischen den Blasformseitenteilen und der Bodenform wenigstens eine erste Trennebene und eine zweite Trennebene vorhanden ist, wobei die erste Trennebene zwischen den beiden Seitenteilen verläuft und die zweite Trennebene zwischen den Seitenteilen und der Bodenform, wobei durch die zweite Trennebene die Blasformseitenteile und die Bodenform voneinander trennbar sind und die Bodenform durch einen Bodenhub von den Blasformseitenteilen entfernbar ist.

Erfindungsgemäß handelt es sich bei der Blasform um eine Blasform, mit welcher Behältnisse mit einem runden Querschnitt herstellbar sind und die Bodenform weist bei einer Draufsicht einen von einem runden Querschnitt abweichenden Querschnitt auf. Dabei wird auch dieser von dem runden Querschnitt abweichende Querschnitt insbesondere durch das Herabsetzen der zweiten Trennebene bei gleichbleibender Behältnisbzw. Blasformkontur erreicht.

Bei der erfindungsgemäßen Vorrichtung zum Umformen von Kunststoffvorformlingen zu Kunststoffbehältnissen handelt es sich bevorzugt um eine Blasmaschine. Dies bedeutet, dass die Kunststoffvorformlinge zunächst in einer Heizstrecke thermisch konditioniert und anschließend durch Beaufschlagung mit einem flüssigen oder gasförmigen Medium expandiert werden.

Das fließfähige Medium steht bevorzugt unter Druck. Für die Zuführung des unter Druck stehenden Mediums weist die Vorrichtung eine Blasdüse auf, welche an eine Mündung der Kunststoffvorformlinge dichtend anlegbar ist, um die Kunststoffvorformlinge so mit flüssigem oder gasförmigem Medium zu expandieren. Daneben ist bevorzugt auch eine Ventilanordnung vorgesehen, welche die Zuführung der Blasluft an die Kunststoffvorformlinge steuert. Bevorzugt ist es allerdings auch denkbar, dass die Expansion des Behältnisses mittels des Produkts erfolgt, so dass eine gleichzeitige Befüllung und Expansion des Behältnisses vorgenommen wird.

Bevorzugt handelt es sich bei der Blasmaschine um eine Streckblasmaschine, was bedeutet, dass die Vorformlinge vor und/oder während der Expansion mittels einer Reckstange in Längsrichtung gedehnt werden. Die Blasstationen weisen dabei jeweils Reckstangen auf, welche in die Kunststoffvorformlinge einführbar sind und die Kunststoffvorformlinge in ihrer Längsrichtung dehnen. Die Reckstangen weisen dabei bevorzugt einen Antrieb, insbesondere einen elektrischen (ggfs. aber auch hydraulischen oder pneumatischen) Antrieb auf. Denkbar ist bevorzugt allerdings auch die Reckstangen über Kurven zu steuern.

Bei einer vorteilhaften Ausführungsform ist eine Vielzahl von Blasstationen bzw. Blasformen an einem gemeinsamen beweglichen Träger angeordnet. Bei diesem Träger handelt es sich dabei insbesondere um einen drehbaren Träger. Die Blasstationen weisen jeweils eine Blasformeinrichtung auf, welche bevorzugt einen Hohlraum ausbilden, innerhalb dessen die Kunststoffvorformlinge zu den Kunststoffbehältnissen expandierbar sind. Diese Blasformeinrichtungen sind dabei bevorzugt mehrteilig ausgebildet und weisen zwei Blasformseitenteile und eine Bodenform auf.

Bevorzugt sind diese Blasformseitenteile lösbar an einer Formträgerschale oder an den Blasformträgern angeordnet. Die Blasformträger sind bezüglich einander schwenkbar, um die Blasformeinrichtungen zu öffnen und zu schließen. Zudem weist der Blasformträger Verriegelungsmechanismen auf, um die Formhälften während des Blasvorgangs gegeneinander zu verriegeln.

Besonders bevorzugt ist die Blasmaschine bzw. sind der Träger und die Blasformanordnungen innerhalb eines Reinraums angeordnet, welcher die Blasformmaschine gegenüber einer unsterilen Umgebung abgrenzt. Antriebseinrichtungen für die Verschließung, Verriegelung und/oder Öffnung der Blasformen sind dabei bevorzugt außerhalb des Reinraums angeordnet.

Die Blasformeinrichtungen werden bevorzugt innerhalb des Reinraums transportiert. Der Reinraum wird bevorzugt von mehreren Wandungen begrenzt. Bevorzugt wird der Reinraum dabei von wenigstens einer stehenden Wandung und einer sich gegenüber dieser stehenden Wandung bewegenden Wandung begrenzt. Der Reinraum grenzt die Blasformen insbesondere von einer unsterilen Umgebung ab. Vorteilhaft ist der Reinraum ring- oder torusartig um die Blasstationen bzw. Umformungsstationen und/oder den Transportpfad der Kunststoffbehältnisse ausgebildet.

Bei einer bevorzugten Ausführungsform verläuft die zweite Trennebene bevorzugt in horizontaler Richtung zwischen den Blasformseitenteilen und der Bodenform. Unter einer horizontalen Richtung wird dabei verstanden, dass die zweite Trennebene bevorzugt senkrecht zu einer Längsrichtung des in der Blasform angeordneten Behältnisses verläuft, in welcher der Mündungsbereich des Behältnisses nach oben ragt bzw. nach oben gerichtet ist.

Bei einer weiteren bevorzugten Ausführungsform verläuft die erste Trennebene bevorzugt in vertikaler Richtung zwischen den beiden Blasformseitenteilen. Unter einer vertikalen Richtung wird dabei verstanden, dass die erste Trennebene bevorzugt in der Längsrichtung des in der Blasform angeordneten Behältnisses verläuft, in welcher der Mündungsbereich des Behältnisses nach oben ragt bzw. nach oben gerichtet ist. Die Blasformseitenteile sind dabei zum Öffnen und Schließen der Blasform bevorzugt zueinander schwenkbar angeordnet.

Besonders bevorzugt sind die erste Trennebene und die zweite Trennebene senkrecht zueinander angeordnet und insbesondere in einem Winkel von genau 90° zueinander angeordnet.

In einer weiteren bevorzugten Ausführungsform entspricht die Höhe des Bodenhubs wenigstens der Höhe der Bodenform. Unter der Höhe der Bodenform wird dabei derjenige Bereich verstanden, in dem die Bodenkontur des Behältnisses angeordnet ist bzw. der Bereich der Bodenform welcher formgebend für den Standbereich des Behältnisses ist. Eventuelle unterhalb dieses Bereichs angeordnete Bereiche der Bodenform werden dagegen nicht zu der Höhe der Bodenform gezählt.

Bei einer weiteren bevorzugten Ausführungsform ist die Höhe der Bodenform und/oder der zweiten Trennebene kleiner ist als die Hälfte eines Behältnisdurchmessers eines mit der Vorrichtung hergestellten Behältnisses. Bevorzugt entspricht demnach die Höhe der zweiten Trennebene der Höhe der Bodenform. Die Höhe der zweiten Trennebene kann dabei, bevorzugt ausgehend von einem Standkreis des Behältnisses, mit folgender Formel berechnet werden:

$$Höhe_{Trennfuge} < \frac{Behälterdurchmesser}{2}.$$

In einer weiteren vorteilhaften Ausführungsform ist der Blasformdurchmesser bevorzugt größer oder gleich 150 mm, bevorzugt größer oder gleich 140 mm und besonders bevorzugt größer oder gleich 125 mm. Unter dem Blasformdurchmesser wird dabei insbesondere der Außenumfang der Blasform verstanden. Bei einem Blasformdurchmesser von kleiner als 125 mm ist es nicht zwingend notwendig den Bodenhub zu verringern, da hier die Bodenform bereits eine vergleichsweise geringe Höhe aufweist und auch ein entsprechend niedrigerer Bodenhub ausgeführt werden muss, allerdings ist es auch bei derartigen Blasformdurchmessern denkbar den Bodenhub herabzusetzen.

Bei einer weiteren bevorzugten Ausführungsform liegt die Höhe der Bodenform bei einem Behältnisdurchmesser von 105 mm bevorzugt zwischen 51 mm und 30 mm, bevorzugt zwischen 51 mm und 32 mm und besonders bevorzugt zwischen 51 mm und 35 mm. Bevorzugt handelt es sich dabei auch bei dem Behältnisdurchmesser um den Außenumfang des Behältnisses. An diesem beispielshaften Behältnis kann daher der Bodenhub von derzeit 51 mm, gemessen von der Bodenunterkante zur Trennebene, auf 40 mm und bevorzugt auf 35 mm reduziert werden.

Es wird darauf hingewiesen, dass ein Behältnis mit einem Durchmesser von 105 mm lediglich als Beispiel angegeben wurde, um die Reduzierung des Bodenhubs zu verdeutlichen. Es versteht sich, dass daher mit der erfindungsgemäßen Vorrichtung auch bei Behältnissen mit einem Durchmesser von höher oder niedriger als 105 mm eine erhebliche Reduktion des Bodenhubs erreicht werden kann. Bevorzugt wird daher mit der erfindungsgemäßen Vorrichtung die Höhe der Bodenform und/oder der zweiten Trennebene und/oder die Höhe des Bodenhubs um wenigstens 41 %, bevorzugt um wenigstens 37 % und besonders bevorzugt um wenigstens 32 % reduziert.

Bei einer weiteren vorteilhaften Ausführungsform weist eine Schnittfläche der Bodenform in der Draufsicht einen Hinterschnitt auf. Es wird daher mit der Erfindung konkret vorgeschlagen, die Trennung bzw. die zweite Trennebene soweit nach unten zu verlegen bis die in der Draufsicht betrachtete Schnittfläche der Bodenform einen Hinterschnitt bei der Trennung der Blasformteile erzeugt. Dies bedeutet, dass die Bodenform in der Draufsicht keinen runden Querschnitt aufweist. Der Hinterschnitt wird dabei bevorzugt durch die Form der in der Bodenform ausgebildeten Standfüße erzeugt.

Die vorliegende Erfindung ist weiterhin auch auf eine Blasform für eine erfindungsgemäße Vorrichtung zum Umformen von Kunststoffvorformlingen zu Kunststoffbehältnissen gerichtet, welche wenigstens zwei Blasformseitenteile und eine Bodenform aufweist, wobei die Blasformseitenteile und die Bodenform einen Hohlraum ausbilden, welcher einer Negativkontur eines umzuformenden Kunststoffbehältnisses entspricht, wobei die Bodenform eine Kontur des Behältnisses und insbesondere einen Standbereich des Behältnisses ausbildet und die Blasformseitenteile eine Kontur der Außenwandung des Behältnisses ausbilden.

Erfindungsgemäß ist zumindest ein Teil der Bodenkontur der Bodenform in den Blasformseitenteilen angeordnet und/oder es handelt sich bei der Blasform um eine Blasform, mit welcher Behältnisse mit einem runden Querschnitt herstellbar sind und die Bodenform weist bei einer Draufsicht einen von einem runden Querschnitt abweichenden Querschnitt auf.

Demnach dient auch die erfindungsgemäße Blasform dazu die Höhe des Bodenhubs durch das Herabsetzen der Höhe der Bodenform und/oder der Höhe der zweiten Trennebene zu reduzieren. Dabei handelt es sich bei dem Teil der Bodenkontur, welcher in den Blasformseitenteilen angeordnet ist, bevorzugt um einen Abschnitt, welcher den Standbereich bzw. die Standfüße des Behältnisses ausbildet. Dies wird bevorzugt durch das Herabsetzen der zweiten Trennebene bei gleichbleibender Behältnis- bzw. Blasformkontur erreicht. Der von dem runden Querschnitt abweichende Querschnitt wird dabei insbesondere auch durch das Herabsetzen der zweiten Trennebene bei gleichbleibender Behältnisbzw. Blasformkontur erreicht bzw. erzeugt.

In den Blasformseitenteilen und/oder der Bodenform sind bevorzugt Kanäle zur Temperierung der Blasform angeordnet. Bevorzugt werden diese Kanäle mit temperiertem Wasser oder temperierter Luft beaufschlagt.

Die vorliegende Erfindung ist weiterhin auch auf ein Verfahren zur Herstellung eines Behältnisses mit wenigstens einer erfindungsgemäßen Blasform gerichtet.

Es wird demnach auch verfahrensseitig vorgeschlagen, die Höhe des Bodenhubs durch das Herabsetzten der Höhe der Bodenform und/oder der Höhe der zweiten Trennebene zu reduzieren.

Bei dem Verfahren zur Herstellung der Behältnisse werden Kunststoffvorformlinge bevorzugt innerhalb der Blasform mit einer Reckstange in Längsrichtung gestreckt und anschließend mit einem gasförmigen Medium, wie insbesondere Druckluft, beaufschlagt, wodurch das Behältnis an die Kontur der Blasform gedrückt wird und dessen Form annimmt.

Nach der Umformung der Behältnisse werden die Blasformseitenteile bevorzugt durch verschwenken geöffnet und die Blasformseitenteile und die Bodenform voneinander getrennt, in dem die Bodenform durch einen Bodenhub von den Blasformseitenteilen entfernt wird. Durch den Bodenhub wird das Behältnis entformt und das fertige Behältnis kann aus der Blasform entnommen werden.

Die Entnahme des Behältnisses kann dabei entweder manuell durch einen Bediener oder automatisch durch eine Greifeinrichtung und/oder eine der Blasmaschine folgende Abführeinrichtung erfolgen.

Weitere Vorteile und Ausführungsformen ergeben sich aus den beigefügten Zeichnungen. Darin zeigen:

Fig. 1    eine schematische Darstellung einer erfindungsgemäßen Vorrichtung zum Umformen von Kunststoffvorformlingen zu Kunststoffbehältnissen;

Fig. 2a    eine schematische Darstellung eines Bodenbereichs eines Behältnisses;

Fig. 2b    eine weitere schematische Darstellung eines Bodenbereichs eines Behältnisses;

Fig. 3a    eine schematische Darstellung einer Blasform gemäß dem Stand der Technik;

Fig. 3b    eine schematische Darstellung einer erfin-

Fig. 4a    eine schematische Darstellung eines Bodenbereichs eines Behältnisses;

Fig. 4b    eine Draufsicht auf eine Bodenform gemäß
           dem Stand der Technik;

Fig. 5a    eine weitere schematische Darstellung eines
           Bodenbereichs eines Behältnisses;

Fig. 5b    eine Draufsicht auf eine erfindungsgemäße
           Bodenform;

Fig. 6a    eine weitere schematische Darstellung eines
           Bodenbereichs eines Behältnisses;

Fig. 6b    eine Draufsicht auf eine weitere erfindungsgemäße Bodenform;

Fig. 7a    eine weitere schematische Darstellung eines
           Bodenbereichs eines Behältnisses; und

Fig. 7b    eine Draufsicht auf eine weitere erfindungsgemäße Bodenform.

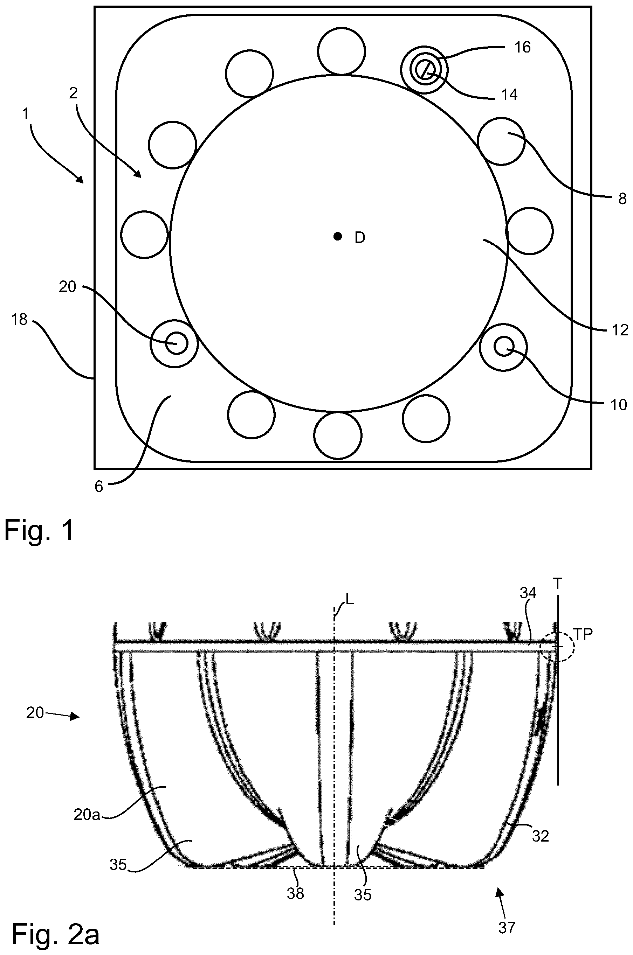

Figur 1 zeigt eine schematische Darstellung einer Vorrichtung 1 zum Umformen von Kunststoffvorformlingen 10 zu Kunststoffbehältnissen 20. Dabei werden die Kunststoffvorformlinge 10 den einzelnen Umformungsstationen 8 zugeführt und, bevorzugt während sie von einer Transporteinrichtung 2 transportiert werden, zu Kunststoffbehältnissen 20 expandiert. Nach dieser Expansion werden die Kunststoffbehältnisse 20 wieder aus der Vorrichtung 1 entnommen. Zu diesem Zweck kann ein (nicht gezeigter) Zuführstern vorgesehen sein, der die Kunststoffvorformlinge der Vorrichtung 1 zuführt, sowie eine (ebenfalls nicht gezeigte) Abführeinrichtung, insbesondere ebenfalls ein Transportstern, der die fertiggestellten Kunststoffbehältnisse 20 wieder von der Vorrichtung abführt.

Die Vorrichtung 1 weist einen Stationsträger 12 auf, an dem eine Vielzahl von Umformungsstationen 8 angeordnet ist. Dieser Stationsträger kann dabei beispielsweise, wie in Figur 1 gezeigt, ein Blasrad sein, welches bezüglich einer Drehachse D (welche hier senkrecht zu der Figurenebene und damit vertikal verläuft) drehbar ist. Jede einzelne Umformungsstation 8 weist dabei jeweils eine Blasform 14 auf, welche sich aus zwei Blasformseitenteilen 14a, 14b und einer Bodenform 14c zusammensetzt. Die Blasformen 14 sind dabei an Blasformträgern 16 angeordnet und können von diesen entnommen bzw. an diesen angeordnet werden.

Das Bezugszeichen 6 kennzeichnet einen Basisträger, an dem der Stationsträger 12 drehbar gelagert ist. Das Bezugszeichen 18 kennzeichnet ein Gehäuse, welches zumindest teilweise den Stationsträger 12 umgibt. Bevorzugt trennt das Gehäuse 18 seinen Innenraum, der als Steril- bzw. Reinraum ausgebildet ist, von einer normalen Atmosphäre ab.

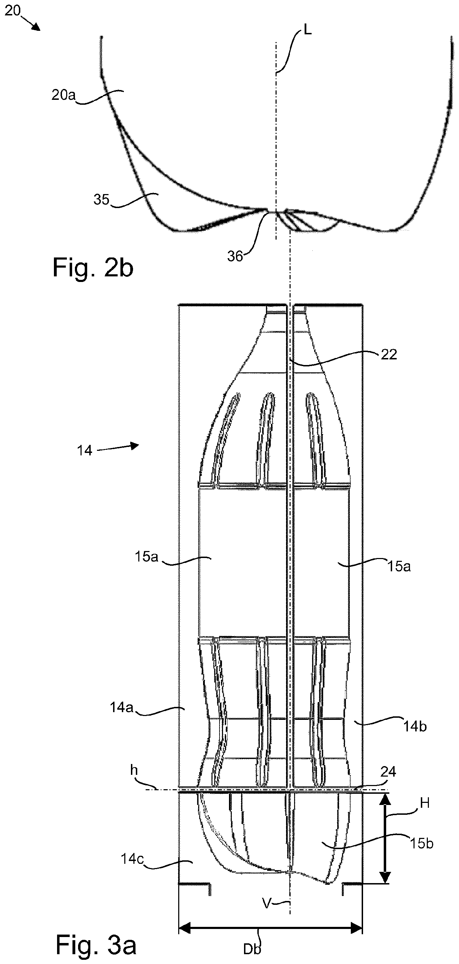

Die Figuren 2a und 2b zeigen jeweils eine schematische Darstellung eines Bodenbereichs 20a bzw. eines Standbereichs 37 eines Behältnisses 20. Erkennbar sind dabei insbesondere die von dem Behältnis 20 ausgebildeten Standfüße 5, wobei das in dieser Figur dargestellte Behältnis 20 bevorzugt fünf Standfüße 5 aufweist. Das Bezugzeichen 36 kennzeichnet dabei das Zentrum des Behältnisses 20, welches bevorzugt, ausgehend von einer Fläche auf der das Behältnis steht, höher liegt als ein, durch den gestrichelten Bereich angedeuteter, Standkreis 38 des Bodenbereichs 20a. Dieser Standkreis 38 liegt dabei auf der Fläche auf dem das Behältnis steht auf.

Das Bezugzeichen TP kennzeichnet einen Tangentenpunkt, in welchen die zweite Trennebene im Stand der Technik angeordnet ist. Bei dem Tangentenpunkt TP handelt es sich dabei insbesondere um einen Punkt, in dem sich eine Krümmung 32 eines Standfußes 35 bzw. eines Bodenteils mit einer vertikalen zylindrischen Mantelfläche 34 des Behältnisses bzw. der Seitenteile schneidet bzw. um einen Punkt an dem eine hier schematisch angedeutete Tangente T gerade vertikal wird. Aus dieser Darstellung ist dabei insbesondere auch gut erkennbar, dass, wenn dieser Punkt der Trennung nach unten gesetzt wird, die Mantelfläche bereits einen von einer Kreisform abweichenden Durchmesser aufweist, da hier die Standfüße 35 des Standbereichs 37 ausgebildet werden.

Figur 3a zeigt eine schematische Darstellung einer Blasform 14 gemäß dem Stand der Technik. Die hier dargestellte Blasform 14 weist dabei zwei Blasformseitenteile 14a und 14b und eine Bodenform 14c auf. Die Blasformseitenteile 14a, 14b bilden dabei eine Kontur 15a des Behältnisses 20 aus und die Bodenform 14c eine Bodenkontur 15b des Behältnisses 20. Das Bezugszeichen 22 kennzeichnet dabei eine erste Trennebene zwischen den Blasformseitenteilen 14a, 14b und das Bezugszeichen 24 eine zweite Trennebene zwischen den Blasformseitenteilen 14a, 14b und der Bodenform 14c. Die erste Trennebene 22 verläuft dabei bevorzugt in vertikaler Richtung v und die zweite Trennebene 24 in horizontaler Richtung h.

Das Bezugszeichen H kennzeichnet die Höhe der Bodenform 14c, welche in dieser Darstellung in dem in Figur 2 erläuterten Bereich liegt. Das Bezugszeichen Db kennzeichnet weiterhin den Blasformdurchmesser der Blasform 14.

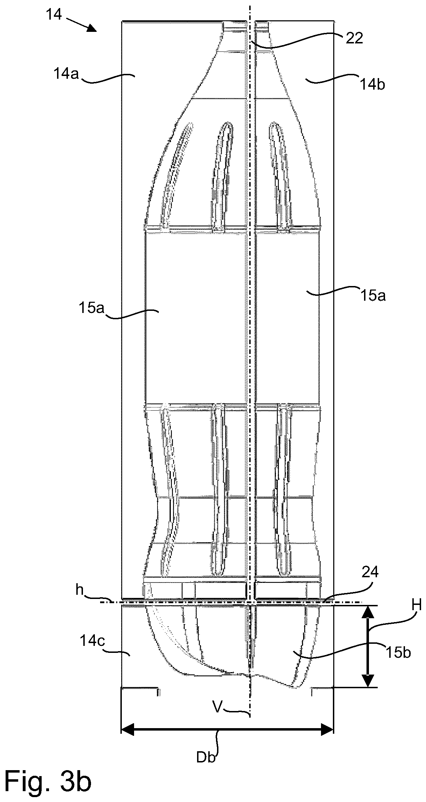

Die Figur 3b zeigt eine schematische Darstellung einer erfindungsgemäßen Blasform 14. Dabei ist insbesondere erkennbar, dass die Höhe H der Bodenform 14c, wesentlich geringer ist als die Höhe H der Bodenform 14c in der Figur 3a. Insbesondere liegt die Höhe H der Bodenform 14c unterhalb dem in Figur 2 erläuterten Bereich.

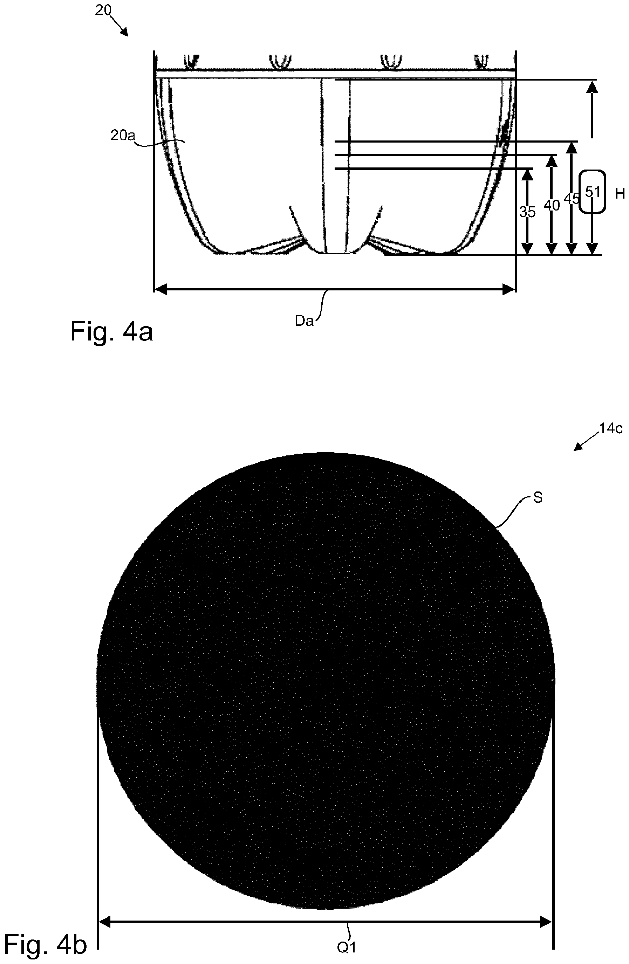

Figur 4a zeigt eine schematische Darstellung eines Bodenbereichs 20a eines Behältnisses 20. Es handelt sich hierbei insbesondere um einen Bodenbereich 20a, welcher eine Höhe H von 51 mm aufweist. In dieser beispielhaften Ausführungsform handelt es sich um ein gemäß dem Stand der Technik hergestelltes Behältnis 20, dessen Bodenhöhe H demnach der Hälfte des Behältnisdurchmessers Da entspricht. Figur 4b zeigt weiter eine Draufsicht auf eine Bodenform 14c gemäß dem Stand der Technik. Dabei ist erkennbar, dass die Schnittfläche S der Bodenform 14c einen runden Querschnitt Q1 aufweist.

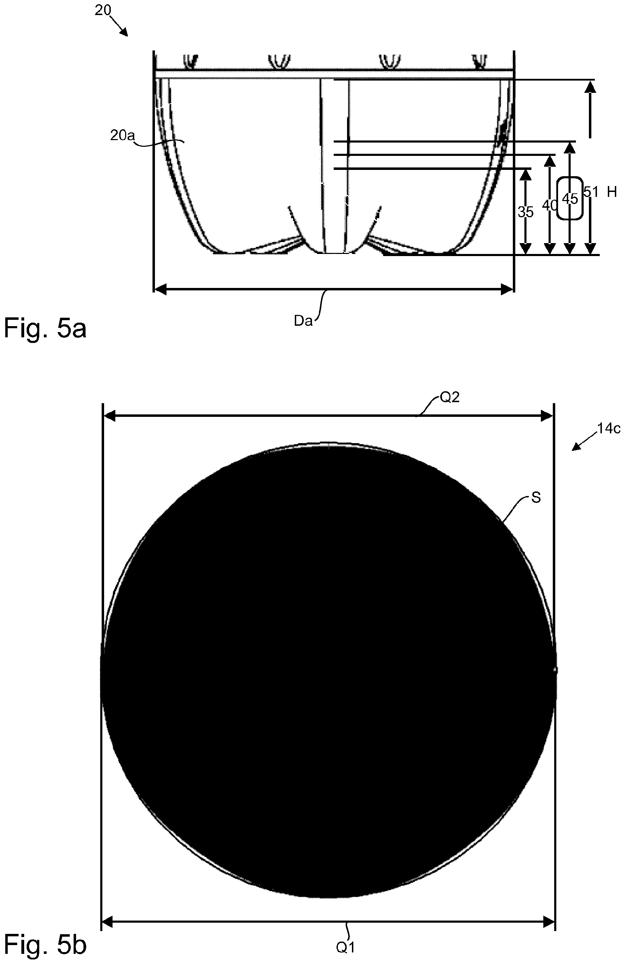

Die Figur 5a zeigt eine weitere schematische Darstellung eines mit einer erfindungsgemäßen Blasform 14 hergestellten Bodenbereichs 20a eines Behältnisses 20 und Figur 5b eine Draufsicht auf eine erfindungsgemäße Bodenform 14c. Bei dem in Figur 5a gezeigten beispielhaften Behältnis 20 ist dabei angedeutet, dass in dieser Darstellung die Höhe H der Bodenform 14c von 51 mm auf 45 mm reduziert wurde. Insbesondere aus der Darstellung der Figur 5b wird hierzu deutlich, dass durch eine derartige Reduzierung die Bodenform 14c in einer Draufsicht anstatt des vormals runden Querschnitt Q1 nun einen von diesem runden Querschnitt Q1 abweichenden Querschnitt Q2 aufweist.

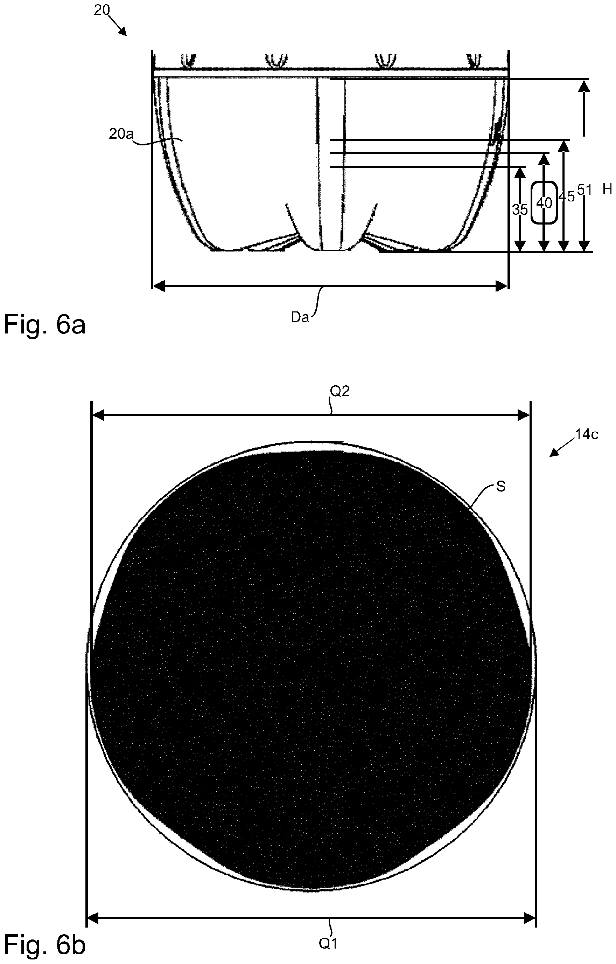

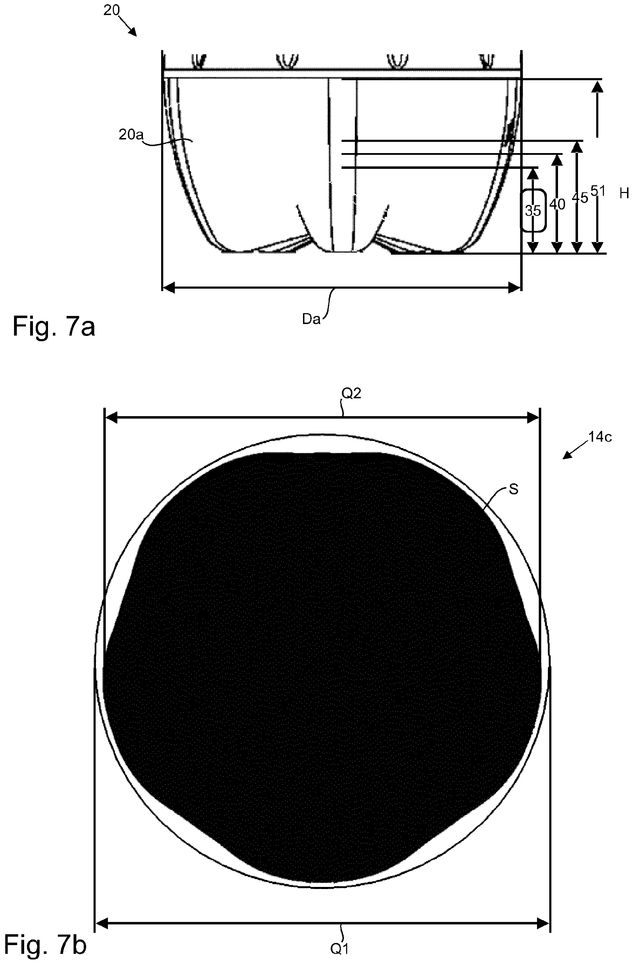

Die Figuren 6a und 6b zeigen eine weitere schematische Darstellung eines mit einer erfindungsgemäßen Blasform hergestellten Bodenbereichs 20a eines Behältnisses 20 sowie wiederum eine Draufsicht auf eine weitere erfindungsgemäße Bodenform 14c. Dabei wurde in dieser beispielhaften Ausführungsform die Höhe H der Bodenform 14c von 51 mm auf 40 mm reduziert. Der Querschnitt Q2 der Draufsicht auf die Bodenform 14c weicht dabei noch weiter von einem runden Querschnitt Q1 ab, als die Bodenform gemäß der Figuren 5a und 5b. Die Schnittfläche S weist dabei zudem einen Hinterschnitt 25 auf, welcher sich aufgrund des von dem runden Querschnitt Q1 abweichenden Querschnitt Q2 der Bodenform bildet. Die Figuren 7a und 7b zeigen eine weitere Ausführungsform des Bodenbereichs 20a des Behältnisses 20 bzw. der Bodenform 14c bei der die Höhe H der Bodenform 14c von 51 mm auf 35 mm reduziert wurde.

**Bezugszeichenliste**

| 1 | Vorrichtung |
|---|---|
| 2 | Transporteinrichtung |
| 6 | Basisträger |
| 8 | Umformungsstation |
| 10 | Kunststoffvorformlinge |
| 12 | Stationsträger |
| 14 | Blasform |
| 14a, 14b | Blasformseitenteile |
| 14c | Bodenform |
| 15a | Kontur des Behältnisses 20 |
| 15b | Bodenkontur des Behältnisses 20 |
| 16 | Blasformträger |
| 18 | Gehäuse |
| 20 | Kunststoffbehältnisse |
| 20a | Bodenbereich des Behältnisses 20 |
| 22 | erste Trennebene |
| 24 | zweite Trennebene |
| 25 | Hinterschnitt |
| 30 | Standbereich |
| 32 | Krümmung der Bodenform 14c/des Stanfußes 35 |
| 34 | vertikale zylindrische Mantelfläche |
| 35 | Standfuß |
| 36 | Zentrum |
| 37 | Standbereich |
| 38 | Standkreis |
| D | Drehachse |
| Da | Behältnisdurchmesser |
| Db | Blasformdurchmesser |
| H | Höhe der Bodenform 14c und/oder der zweiten Trennebene 24 |
| Q1 | runder Querschnitt |
| Q2 | Querschnitt |
| S | Schnittfläche |
| T | Tangente |
| TP | Tangentenpunkt |
| h | horizontale Richtung |
| v | vertikale Richtung |

**Patentansprüche**

1. Vorrichtung (1) zum Umformen von Kunststoffvorformlingen (10) zu Kunststoffbehältnissen (20) mit wenigstens einer Blasform (14), welche wenigstens zwei Blasformseitenteile (14a, 14b) und eine Bodenform (14c) aufweist, wobei die Blasformseitenteile (14a, 14b) und die Bodenform (14c) einen Hohlraum ausbilden, welcher einer Negativkontur des umzuformenden Kunststoffbehältnisses (20) entspricht, wobei zwischen den Blasformseitenteilen (14a, 14b) und der Bodenform (14c) wenigstens eine erste Trennebene (22) und eine zweite Trennebene (24) vorhanden ist, wobei die erste Trennebene (22) zwischen den beiden Seitenteilen (14a, 14b) verläuft und die zweite Trennebene (24) zwischen den Seitenteilen (14a, 14b) und der Bodenform (14c), wobei durch die zweite Trennebene (24) die Blasformseitenteile (14a, 14b) und die Bodenform (14c) voneinander trennbar sind und die Bodenform (14c) durch einen Bodenhub von den Blasformseitenteilen (14a, 14b) entfernbar ist,
**dadurch gekennzeichnet, dass**
es sich bei der Blasform (14) um eine Blasform (14) handelt, mit welcher Behältnisse (20) mit einem runden Querschnitt (Q1) herstellbar sind und die zweite Trennebene (24) soweit nach unten verlegt wird bis eine in einer Draufsicht betrachtete Schnittfläche der Bodenform (14c) einen Hinterschnitt bei der Trennung der Blasformteile erzeugt, so dass die Bodenform (14c) bei der Draufsicht einen von einem runden Querschnitt (Q1) abweichenden Querschnitt (Q2) aufweist, wobei der Hinterschnitt durch die Form der in der Bodenform (14c) ausgebildeten Standfüße erzeugt wird.

2. Vorrichtung (1) nach Anspruch 1,
**dadurch gekennzeichnet, dass**

die zweite Trennebene (24) in horizontaler Richtung (h) zwischen den Blasformseitenteilen (14a, 14b) und der Bodenform (14c) verläuft.

3. Vorrichtung (1) nach wenigstens einem der vorhergehenden Ansprüche,
   **dadurch gekennzeichnet, dass**
   die erste Trennebene (22) in vertikaler Richtung (v) zwischen den beiden Blasformseitenteilen (14a, 14b) verläuft.

4. Vorrichtung (1) nach wenigstens einem der vorhergehenden Ansprüche,
   **dadurch gekennzeichnet, dass**
   die Höhe des Bodenhubs wenigstens der Höhe (H) der Bodenform (14c) entspricht.

5. Vorrichtung (1) nach wenigstens einem der vorhergehenden Ansprüche,
   **dadurch gekennzeichnet, dass**
   die Höhe (H) der Bodenform (14c) und/oder der zweiten Trennebene (24) kleiner ist als die Hälfte eines Behältnisdurchmessers eines mit der Vorrichtung (1) hergestellten Behältnisses (20).

6. Vorrichtung (1) nach wenigstens einem der vorhergehenden Ansprüche,
   **dadurch gekennzeichnet, dass**
   der Blasformdurchmesser (Db) bevorzugt größer oder gleich 150 mm, bevorzugt größer oder gleich 140 mm und besonders bevorzugt größer oder gleich 125 mm ist.

7. Vorrichtung (1) nach wenigstens einem der vorhergehenden Ansprüche,
   **dadurch gekennzeichnet, dass**
   die Höhe (H) der Bodenform (14c) bei einem Behältnisdurchmesser von 105 mm bevorzugt zwischen 51 mm und 30 mm liegt, bevorzugt zwischen 51 mm und 32 mm und besonders bevorzugt zwischen 51 mm und 35 mm.

8. Vorrichtung (1) nach wenigstens einem der vorhergehenden Ansprüche,
   **dadurch gekennzeichnet, dass**
   eine Schnittfläche (S) der Bodenform (14c) in der Draufsicht einen Hinterschnitt (25) aufweist.

9. Blasform (14) für eine Vorrichtung (1) gemäß Anspruch 1, mit wenigstens zwei Blasformseitenteilen (14a, 14b) und einer Bodenform (14c), wobei die Blasformseitenteile (14a, 14b) und die Bodenform (14c) einen Hohlraum ausbilden, welcher einer Negativkontur eines umzuformenden Kunststoffbehältnisses (20) entspricht, wobei die Bodenform (14c) eine Kontur (15b) des Behältnisses (20) und insbesondere einen Standbereich (30) des Behältnisses (20) ausbildet und die Blasformseitenteile (14a, 14b) eine Kontur (15a) der Außenwandung des Behältnisses (20) ausbilden,
   **dadurch gekennzeichnet, dass**
   zumindest ein Teil der Bodenkontur (15b) der Bodenform (14c) in den Blasformseitenteilen (14a, 14b) angeordnet ist und/oder es sich bei der Blasform (14) um eine Blasform (14) handelt, mit welcher Behältnisse (20) mit einem runden Querschnitt (Q1) herstellbar sind und die Bodenform (14c) bei einer Draufsicht einen von einem runden Querschnitt (Q1) abweichenden Querschnitt (Q2) aufweist.

10. Verfahren zur Herstellung eines Kunststoffbehältnisses (20) mit wenigstens einer Blasform (14) gemäß dem Anspruch 9

## Claims

1. Apparatus (1) for forming plastic preforms (10) into plastic containers (20), having at least one blow mould (14) which has at least two blow mould side parts (14a, 14b) and a bottom mould (14c), wherein the blow mould side parts (14a, 14b) and the bottom mould (14c) forming a cavity which corresponds to a negative contour of the plastic container (20) to be formed, wherein between the blow mould side parts (14a, 14b) and the bottom mould (14c) at least a first parting plane (22) and a second parting plane (24) is present, wherein the first parting plane (22) extending between the two side parts (14a, 14b) and the second parting plane (24) extending between the side parts (14a), 14b) and the bottom mould (14c), wherein the blow mould side parts (14a, 14b) and the bottom mould (14c) can be separated from each other by the second parting plane (24) and the bottom mould (14c) can be removed from the blow mould side parts (14a, 14b) by a bottom lift,
   **characterised in that**
   the blow mould (14) is a blow mould (14) with which containers (20) with a round cross-section (Q1) can be produced, and the second parting plane (24) is moved downwards until the cut surface of the bottom mould (14c) considered in the top view creates an undercut when separating the blow mould parts, so that the bottom mould (14c) has a cross-section (Q2) deviating from a round cross-section (Q1) when viewed from above, wherein the undercut is created by the shape of the standing feet formed in the bottom mould (14c).

2. Apparatus (1) according to claim 1,
   **characterised in that**
   the second parting plane (24) runs in horizontal direction (h) between the blow mould side parts (14a, 14b) and the bottom mould (14c).

3. Apparatus (1) according to at least one of the preceding claims,
**characterised in that**
the first parting plane (22) runs in a vertical direction (v) between the two blow mould side parts (14a, 14b).

4. Apparatus (1) according to at least one of the preceding claims,
**characterised in that**
the height of the bottom lift corresponds at least to the height (H) of the bottom mould (14c).

5. Apparatus (1) according to at least one of the preceding claims,
**characterised in that**
the height (H) of the bottom mould (14c) and/or the second parting plane (24) is less than half a container diameter of a container (20) produced with the apparatus (1).

6. Apparatus (1) according to at least one of the preceding claims,
**characterised in that**
the blow-mould diameter (Db) is preferably greater than or equal to 150 mm, preferably greater than or equal to 140 mm and particularly preferably greater than or equal to 125 mm.

7. Apparatus (1) according to at least one of the preceding claims,
**characterised in that**
the height (H) of the bottom mould (14c) for a container diameter of 105 mm is preferably between 51 mm and 30 mm, preferably between 51 mm and 32 mm, and particularly preferably between 51 mm and 35 mm.

8. Apparatus (1) according to at least one of the preceding claims,
**characterised in that**
a cut surface (S) of the bottom mould (14c) has an undercut (25) in the top view.

9. A blow mould (14) for an apparatus (1) according to claim 1, comprising at least two blow mould side parts (14a, 14b) and a bottom mould (14c), wherein the blow mould side parts (14a, 14b) and the bottom mould (14c) form a cavity, which corresponds to a negative contour of a plastic container (20) to be moulded, wherein the bottom mould (14c) forms a contour (15b) of the container (20) and in particular a standing area (30) of the container (20) and the blow mould side parts (14a, 14b) form a contour (15a) of the outer wall of the container (20),
**characterised in that**
at least a part of the bottom contour (15b) of the bottom mould (14c) is arranged in the blow mould side parts (14a, 14b) and/or the blow mould (14) is a blow mould (14) with which containers (20) with a round cross-section (Q1) can be produced and the bottom mould (14c) has a cross-section (Q2) deviating from a round cross-section (Q1) in a top view.

10. A method of manufacturing a plastic container (20) with at least one blow mould (14) according to claim 9.

## Revendications

1. Dispositif (1) de formage d'ébauches en matière plastique (10) en récipients en matière plastique (20) avec au moins un moule de soufflage (14), qui présente au moins deux parties latérales de moule de soufflage (14a, 14b) et une forme de fond (14c), dans lequel les parties latérales de moule de soufflage (14a, 14b) et la forme de fond (14c) réalisent un espace creux qui correspond à un contour négatif du récipient en matière plastique (20) à former, dans lequel au moins un premier plan de séparation (22) et un second plan de séparation (24) sont présents entre les parties latérales de moule de soufflage (14a, 14b) et la forme de fond (14c), dans lequel le premier plan de séparation (22) s'étend entre les deux parties latérales (14a, 14b) et le second plan de séparation (24) entre les parties latérales (14a, 14b) et la forme de fond (14c), dans lequel les parties latérales de moule de soufflage (14a, 14b) et la forme de fond (14c) sont séparables les unes des autres par le second plan de séparation (24) et la forme de fond (14c) peut être retirée des parties latérales de forme de fond (14a, 14b) par un levage du fond,
**caractérisé en ce que**
il s'agit pour le moule de soufflage (14) d'un moule de soufflage (14), avec lequel peuvent être fabriqués des récipients (20) avec une section transversale (Q1) ronde et le second plan de séparation (24) est déplacé vers le bas jusqu'à ce qu'une surface de coupe considérée dans une vue en élévation de la forme de fond (14c) génère une contre-dépouille lors de la séparation des parties de moule de soufflage de sorte que la forme de fond (14c) présente pour la vue en élévation une section transversale (Q2) divergeant d'une section transversale (Q1) ronde, dans lequel la contre-dépouille est générée par la forme des pieds réalisés dans la forme de fond (14c).

2. Dispositif (1) selon la revendication 1,
**caractérisé en ce que**
le second plan de séparation (24) s'étend dans le sens horizontal (h) entre les parties latérales de forme de fond (14a, 14b) et la forme de fond (14c).

3. Dispositif (1) selon au moins l'une quelconque des revendications précédentes,
**caractérisé en ce que**
le premier plan de séparation (22) s'étend dans le sens vertical (v) entre les deux parties latérales de moule de soufflage (14a, 14b).

4. Dispositif (1) selon au moins l'une quelconque des revendications précédentes,
   **caractérisé en ce que**
   la hauteur du levage du fond correspond à au moins la hauteur (H) de la forme de fond (14c).

5. Dispositif (1) selon au moins l'une quelconque des revendications précédentes,
   **caractérisé en ce que**
   la hauteur (H) de la forme de fond (14c) et/ou du second plan de séparation (24) est inférieure à la moitié d'un diamètre de récipient d'un récipient (20) fabriqué avec le dispositif (1).

6. Dispositif (1) selon au moins l'une quelconque des revendications précédentes,
   **caractérisé en ce que**
   le diamètre de moule de soufflage (Db) est de préférence supérieur ou égal à 150 mm, de préférence supérieur ou égal à 140 mm et de manière particulièrement préférée supérieur ou égal à 125 mm.

7. Dispositif (1) selon au moins l'une quelconque des revendications précédentes,
   **caractérisé en ce que**
   la hauteur (H) de la forme de fond (14c) se situe pour un diamètre de récipient de 105 mm, de préférence entre 51 mm et 30 mm, de préférence entre 51 mm et 32 mm et de manière particulièrement préférée entre 51 mm et 35 mm.

8. Dispositif (1) selon au moins l'une quelconque des revendications précédentes,
   **caractérisé en ce que**
   une surface de coupe (S) de la forme de fond (14c) présente dans la vue en élévation une contre-dépouille (25).

9. Moule de soufflage (14) pour un dispositif (1) selon la revendication 1, avec au moins deux parties latérales de moule de soufflage (14a, 14b) et une forme de fond (14c), dans lequel les parties latérales de moule de soufflage (14a, 14b) et la forme de fond (14c) réalisent un espace creux qui correspond à un contour négatif d'un récipient en matière plastique (20) à former, dans lequel la forme de fond (14c) réalise un contour (15b) du récipient (20) et en particulier une zone de base (30) du récipient (20) et les parties latérales de moule de soufflage (14a, 14b) réalisent un contour (15a) de la paroi extérieure du récipient (20),
   **caractérisé en ce que**
   au moins une partie du contour de fond (15b) de la forme de fond (14c) est agencée dans les parties latérales de moule de soufflage (14a, 14b) et/ou il s'agit pour le moule de soufflage (14) d'un moule de soufflage (14), avec lequel peuvent être fabriqués des récipients (20) avec une section transversale (Q1) ronde et la forme de fond (14c) présente pour une vue en élévation une section transversale (Q2) divergeant d'une section transversale (Q1) ronde.

10. Procédé de fabrication d'un récipient en matière plastique (20) avec au moins un moule de soufflage (14) selon la revendication 9.

**Fig. 1**

**Fig. 2a**

20

20a

35

36

L

## Fig. 2b

22

14

15a

15a

14a

14b

h

24

H

15b

14c

V

Db

## Fig. 3a

Fig. 3b

Fig. 4a

Fig. 4b

20

20a

35 40 45 51 H

Da

Fig. 5a

Q2

14c

S

Q1

Fig. 5b

Fig. 6a

Fig. 6b

Fig. 7a

Fig. 7b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2017232656 A1
- US 2015298386 A1
- US 4547333 A
- US 5122327 A
- US 5968560 A
- US 8550803 B2
- US 2015061196 A1
- US 2017173845 A1
- US 200609369 A1